# FASCICULE DE BREVET EUROPEEN

(11) **EP 2 893 276 B1**
(45) Date de publication et mention de la délivrance du brevet: **14.07.2021**
(21) Numéro de dépôt: 13715268.2
(22) Date de dépôt: 05.03.2013
(51) Int. Cl.: F25J 3/02, B01D 53/00

(54) **PROCÉDÉ ET APPAREIL DE CONDENSATION D'UN DÉBIT GAZEUX RICHE EN DIOXYDE DE CARBONE**
VERFAHREN UND VORRICHTUNG ZUM KONDENSIEREN EINES KOHLENDIOXIDREICHEN GASSTROMS
METHOD AND DEVICE FOR CONDENSING A CARBON DIOXIDE-RICH GAS STREAM

(30) Priorité: 13.03.2012 FR 1252262
(43) Date de publication de la demande: 15.07.2015
(73) Titulaire: L'Air Liquide Société Anonyme pour l'Etude et l'Exploitation des Procédés Georges Claude, 75007 Paris (FR)
(72) Inventeur: DARDE, Arthur, F-75005 Paris (FR)
(74) Mandataire: Air Liquide
(86) Numéro de dépôt international: PCT/FR2013/050468
(87) Numéro de publication internationale: WO 2013/135996

(56) Documents cités:
- EP-A1- 0 644 390
- EP-A1- 0 654 643
- DE-U1-202008 013 445
- US-A1- 2011 296 868
- ASPELUND A ET AL: "SHIP TRANSPORT OF CO2: Technical SOlutions and Analysis of Costs, Energy Utilization, Exergy Efficiency and CO2 Emissions", CHEMICAL ENGINEERING RESEARCH AND DESIGN, PART A, INSTITUTION OF CHEMICAL ENGINEERS, XX, vol. 84, no. A9, 1 septembre 2006 (2006-09-01), pages 847-855, XP009093670, ISSN: 0263-8762, DOI: 10.1205/CHERD.5147
- None

## Description

La présente invention est relative à un procédé et à une installation de condensation d'un débit gazeux riche en dioxyde de carbone. Un débit riche en dioxyde de carbone contient au moins 60% de dioxyde de carbone, voire au moins 90% de dioxyde de carbone.

Ces pourcentages, comme tous les pourcentages concernant des puretés dans ce document, sont des pourcentages molaires.

Des circuits de refroidissement utilisant de l'eau, éventuellement glycolée, pour refroidir un compresseur d'un débit riche en dioxyde de carbone sont connus de US-A-2011/0265477.

Après avoir épuré un débit gazeux riche en dioxyde de carbone, il est fréquemment nécessaire de le condenser en vue de son pompage vers une canalisation.

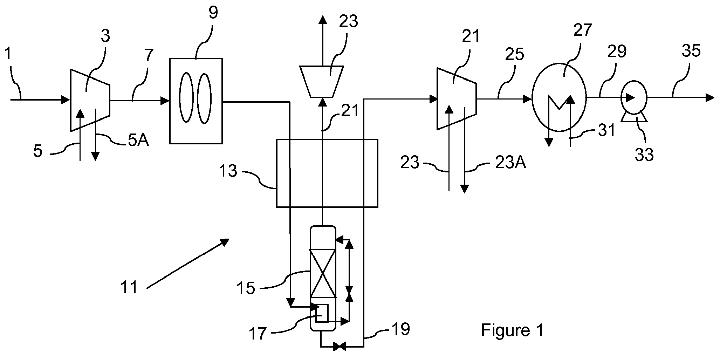

Dans la Figure 1, un compresseur 3 comprime un fluide 1 contenant du dioxyde de carbone à une pression de 1 bar. Le compresseur est tenu en froid par un circuit d'eau 5, 5A. Le fluide comprimé 7 est épuré dans une unité d'épuration 9 et séparé par des moyens de séparation, ici une colonne de distillation à basse température 15. Le fluide se refroidit dans l'échangeur 13, se condense au moins partiellement dans un rebouilleur de cuve 17 et est envoyé comme débit d'alimentation à la colonne 15. Le gaz de tête 22 enrichi en composants légers est détendu dans une turbine 24. Le liquide de cuve 19 se vaporise dans l'échangeur 13 pour former un débit gazeux riche en dioxyde de carbone qui est comprimé dans un compresseur 21. Ce compresseur est refroidi au moyen d'un circuit d'eau 23, 23A. Le débit gazeux 25 se trouvant à 60 bars est condensé par échange de chaleur 27 avec un débit d'eau 31 pour former le liquide 29 qui est pompé dans la pompe 33 à une pression supérieure à 110 bars pour former le produit liquide sous pression 35.

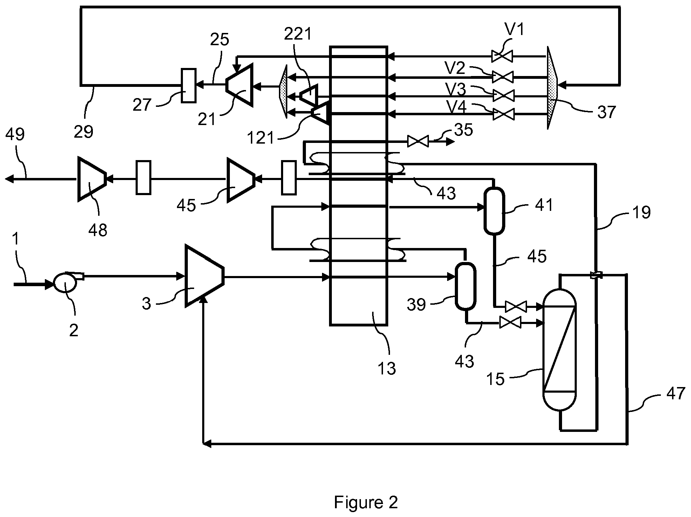

Il est connu du livre « Fabrications et Applications Industrielles de CO2 » de M. Vollenweider, éd. Dunod, 1958, d'utiliser un circuit d'eau commun pour refroidir le dioxyde de carbone à condenser et pour refroidir le compresseur de dioxyde de carbone destiné à être condensé. Or, la Figure 111-1 de la page 30 présente deux débits d'eau qui sont indépendants : l'eau qui sert à condenser le dioxyde de carbone ne sert pas ensuite à refroidir le compresseur. Il est également fréquemment nécessaire de condenser le débit gazeux riche en dioxyde de carbone en vue de son sous-refroidissement pour l'utiliser comme cycle frigorifique comme illustré dans la Figure 2.

Ici un cycle frigorifique a comme gaz de cycle un débit riche en dioxyde de carbone. Ce circuit fermé comprend un condenseur 27 refroidi par un débit d'eau. Le gaz riche en dioxyde de carbone s'y liquéfie pour former le débit 29 et le débit 29 est divisé en quatre débits par le diviseur 37. Chacun des débits est détendu dans une vanne V1, V2, V3, V4 et vaporisé dans l'échangeur 13. Le débit à plus basse pression est comprimé dans le compresseur 121, un autre dans le compresseur 221 et trois des débits sont mélangés avant d'être comprimés dans le compresseur 21. Le quatrième débit est introduit à un niveau intermédiaire du compresseur 21 et le débit entier 25 envoyé au condenseur 27.

Un autre gaz riche en dioxyde de carbone 1 est envoyé à un compresseur 3, refroidi dans l'échangeur 13, partiellement condensé puis envoyé au premier séparateur de phases 39. Le liquide 43 du premier séparateur de phases 39 est détendu et envoyé en tête d'une colonne de distillation 15. Le gaz du premier séparateur de phases est refroidi dans l'échangeur 13, puis envoyé au deuxième séparateur de phases 41. Le liquide formé 45 est détendu et envoyé en tête de la colonne 15. Le gaz 43 se réchauffe dans l'échangeur 13, est détendu dans deux turbines 45, 48 puis sort comme débit 49. Le liquide 19 de la cuve de la colonne se refroidit dans l'échangeur 13 pour former un produit liquide à 7 bars et -50°C. Le froid pour cette liquéfaction est donc fourni par le cycle de réfrigération.

Le gaz de tête 47 de la colonne 15 est réchauffé et envoyé à un niveau intermédiaire du compresseur 3.

La température de condensation du débit gazeux riche en dioxyde de carbone 25 définit la pression à laquelle il faut comprimer le débit riche en dioxyde de carbone dans un compresseur. Plus cette température est basse et plus l'énergie de compression sera faible et le compresseur bon marché.

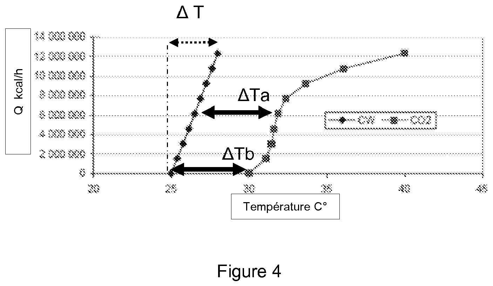

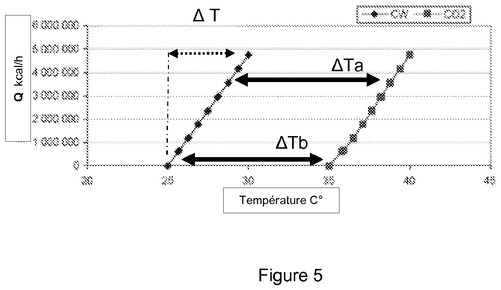

La solution la plus simple consiste à condenser le débit riche en dioxyde de carbone contre de l'eau dont on veillera à l'obtenir la plus froide possible. L'eau peut, par exemple provenir d'un circuit semi-ouvert refroidi par une tour évaporative. Avec une approche thermique minimale donnée dans l'échangeur où le débit riche en dioxyde de carbone condense contre l'eau, moins l'eau va se réchauffer et plus faible sera la température de condensation du débit riche en dioxyde de carbone, et donc sa pression dans le cas d'une condensation sous la pression critique (voir les figures 4 et 5).

Il y a donc un réel intérêt à augmenter le débit d'eau dans l'échangeur où s'effectue la condensation, puisque cela fera d'autant baisser la température de sortie de l'eau et donc celle de condensation du débit riche en dioxyde de carbone. Cependant, cela grossit le réseau d'eau et les coûts qui y sont liés : énergie de pompage, coût des équipements comme les pompes, tuyaux, tours évaporatives, ventilateurs, etc. En effet, le coût d'investissement et une partie des coûts de fonctionnement sont proportionnels au débit d'eau et pas (ou très peu) à l'énergie à évacuer dans le réseau d'eau. Ainsi, dans certains environnements, il est préférable d'augmenter l'élévation de température de l'eau dans les réfrigérants de compresseur au-delà des 10°C généralement retenus. Cela est particulièrement vrai dans les projets où la réfrigération se fait avec des aéroréfrigérants non évaporatifs.

US-A-2011/0296868 décrit un procédé et une installation selon les préambules des revendications 1 et 5 respectivement.

Selon un objet de l'invention, il est prévu un procédé selon la revendication 1.

Selon d'autres aspects facultatifs :
- le débit d'eau réchauffé pendant le refroidissement du compresseur est refroidi et renvoyé au moins en partie pour refroidir le débit riche en dioxyde de carbone à condenser.
- l'eau réchauffée par condensation de dioxyde de carbone est à une première température et est envoyée au(x) compresseur(s) à une température substantiellement égale à la première température.
- l'eau réchauffée par condensation de dioxyde de carbone est divisée en deux portions, une portion étant envoyée au compresseur du débit riche en dioxyde de carbone qui sera ensuite condensé et l'autre portion étant envoyée au compresseur d'un fluide dont le débit riche en dioxyde de carbone est dérivé.

Selon un autre objet de l'invention, il est prévu une installation selon la revendication 5. Selon d'autres aspects de l'invention, l'installation comprend :
- les moyens pour séparer un fluide pour former le débit riche en dioxyde de carbone étant également reliés au condenseur par le biais d'au moins un autre compresseur.
- les moyens pour séparer un fluide sont constitués par un appareil de séparation par condensation et/ou distillation, un appareil de lavage aux amines ou un appareil de séparation par perméation ou par adsorption.
- un circuit d'eau permettant d'envoyer de l'eau réchauffée dans le(s) compresseur(s) à un moyen de refroidissement et du moyen de refroidissement au condenseur.
- un compresseur de débit gazeux riche en dioxyde de carbone, les deux compresseurs ayant des moyens de refroidissement reliés en série avec le condenseur et en parallèle entre les deux compresseurs.
- le condenseur est relié en série avec le(s) compresseur(s) par la conduite pour soutirer le débit d'eau réchauffée.

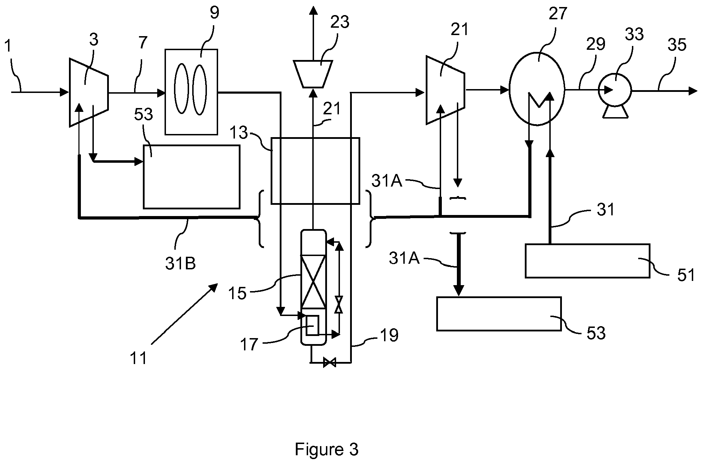

L'invention consiste à positionner en série sur le circuit d'eau, en aval du condenseur du débit gazeux riche en dioxyde de carbone, au moins un autre consommateur d'eau de l'usine pour lesquels la température de l'eau n'est pas si critique (figure 3). Ainsi, quelques degrés supplémentaires sur l'eau de réfrigération des compresseurs n'auront pas un impact majeur sur les performances de l'unité.

Il sera toutefois préférable de conserver l'eau la plus froide possible sur les réfrigérants en amont de la boite froide et d'éventuels groupes frigorifiques, eux-mêmes pouvant être positionnés avant la boite froide ou avant une unité de dessiccation.

L'invention sera décrite en plus de détail en se référant aux figures 3 à 5.

La figure 3 diffère de la figure 1 en ce que l'eau utilisée pour refroidir les compresseurs 3 et 21 provient du même circuit de refroidissement que l'eau du condenseur 27 et a servi à condenser le gaz riche en dioxyde de carbone avant de servir à refroidir les compresseurs.

Ainsi l'eau 31 est divisée en deux parties 31A, 31B. La partie 31A est envoyée au compresseur 21 pour le refroidir et l'eau ainsi réchauffée est envoyée à un moyen de refroidissement 53. La partie 31B est envoyée au compresseur 3 de fluide destiné à la distillation et l'eau ainsi réchauffée est également envoyée au moyen de refroidissement 53 qui peut être une tour de refroidissement. L'eau refroidie 51 provenant du moyen de refroidissement 53 est de nouveau envoyée au condenseur 31.

Le moyen de séparation 11 peut être un moyen de séparation par refroidissement et condensation ou par lavage aux amines ou par perméation ou par adsorption.

Le fluide 1 est de préférence un gaz contenant au moins 50% de dioxyde de carbone.

Ainsi l'eau est envoyée aux deux compresseurs en parallèle. Il serait également envisageable d'envoyer l'eau à un seul de ces deux compresseurs. Il serait également envisageable d'envoyer l'eau à d'autres consommateurs sur le site (compresseurs d'appareils de séparation d'air, réfrigération sur la chaudière ou tout autre consommateur).

Un exemple chiffré illustre les avantages de l'invention :

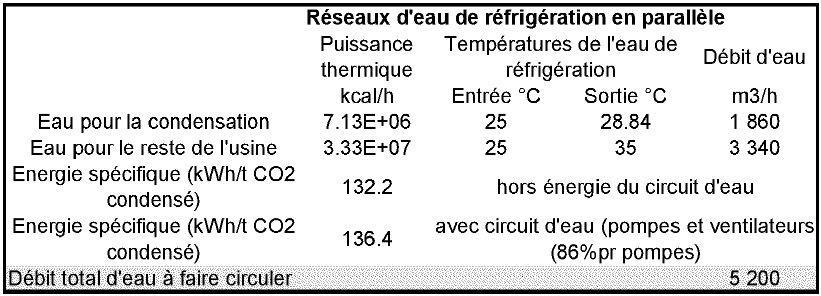

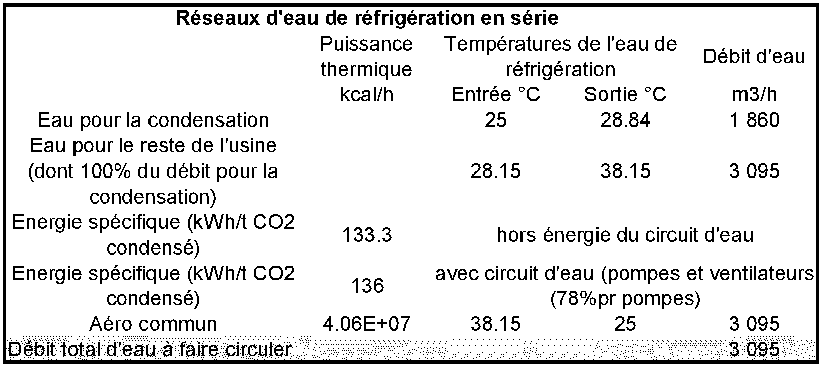

Pour la même quantité condensée de débit riche en dioxyde de carbone, le débit d'eau de réfrigération passe donc de 5200 m³/h selon l'art antérieur à 3095 m³/h pour l'invention. L'énergie spécifique des compresseurs augmente puisque l'eau de réfrigération est plus chaude (de 132,2 à 133,3 kWh/t de CO₂ condensé), mais si l'on prend en compte l'énergie nécessaire pour faire circuler l'eau de réfrigération, l'énergie totale nécessaire sur le site sera réduite.

Un autre avantage de l'invention est qu'il devient économique d'augmenter le débit d'eau dans le condenseur du débit riche en dioxyde de carbone. Si cela ne serait pas économique avec des réseaux en parallèle - car la baisse de température de condensation (et donc d'énergie de compression) devait compenser à elle seule l'augmentation de débit et donc du coût des équipements liés - cela devient envisageable pour des réseaux en série où l'augmentation du débit dans le condenseur joue plusieurs rôles positifs :
▪ Réduction de la température de condensation ;
▪ Réduction de la température de l'eau de réfrigération dans les autres équipements et donc de l'énergie de compression du reste de l'usine.

Il faudra en revanche que le condenseur du débit riche en dioxyde de carbone soit dimensionné pour un plus grand débit d'eau, mais cela est sans doute d'un second ordre de grandeur par rapport à l'intérêt de condenser à plus basse température.

Selon un autre aspect de l'invention, c'est le reste de l'unité qui s'adapte au débit d'eau choisi pour le condenseur. L'élévation thermique augmente alors dans les autres réfrigérants, et le réseau d'eau est plus petit, avec des réfrigérants plus gros car les approches thermiques (DTLM) se réduisent à mesure que l'on chauffe plus l'eau contre le gaz qui se refroidit. Dans l'exemple donné ci-dessus, le débit d'eau consommée sur le site chuterait à 1860 m³/h au lieu de 3100 m³/h et l'énergie de compression augmenterait encore un peu du fait d'une eau plus chaude (28,84°C au lieu de 28,15°C).

La Figure 4 montre un diagramme d'échange thermique dans le condenseur du débit riche en dioxyde de carbone, lorsque le gaz se condense au voisinage de sa pression critique ; ainsi on voit le palier de condensation. La chaleur échangée est montrée en ordonnées et la température en abscisses. ΔT indique l'élévation de la température de l'eau, ΔTa la température d'approche dans l'échangeur de condensation à un point intermédiaire et ΔTb la température d'approche au bout froid.

A la différence de la Figure 4, la Figure 5 montre le même diagramme pour une condensation supercritique, d'où l'absence de palier. La pseudo condensation correspond à un changement de densité marquée.

Il serait également possible de mettre en œuvre l'invention avec le schéma de la Figure 2. Ici de l'eau se réchaufferait dans le condenseur 27. Cette eau réchauffée servirait ensuite pour refroidir au moins un des compresseurs 3, 21, 121, 221 ou tout autre consommateur d'eau de réfrigération du site.

## Revendications

1. Procédé de condensation d'un débit gazeux riche en dioxyde de carbone dans lequel un fluide (1) dont le débit riche en dioxyde de carbone est dérivé par distillation et/ou par lavage aux amines et/ou par perméation et/ ou par adsorption est comprimé dans au moins un compresseur (3), un débit de réfrigérant (31A, 31B) est réchauffé par échange de chaleur avec le débit riche en dioxyde de carbone (25) qui se condense au moins partiellement **caractérisé en ce que** le débit réchauffé, qui est de l'eau, est envoyé à
i) l'au moins un compresseur (3) du fluide et éventuellement à
ii) au moins un compresseur (21) du débit riche en dioxyde de carbone,
pour assurer le refroidissement au moins partiel d'au moins un étage dudit compresseur ou selon le cas desdits compresseurs.

2. Procédé selon la revendication 1 dans lequel le débit d'eau réchauffé (31A, 31B) pendant le refroidissement du compresseur (3) est refroidi et renvoyé au moins en partie pour refroidir le débit riche en dioxyde de carbone à condenser.

3. Procédé selon l'une des revendications précédentes dans lequel l'eau (31A, 31B) réchauffée par condensation de dioxyde de carbone est à une première température et est envoyée au(x) compresseur(s) (3, 21) à une température substantiellement égale à la première température.

4. Procédé selon l'une des revendications précédentes dans lequel l'eau réchauffée par condensation de dioxyde de carbone est divisée en deux portions (31A, 31B), une portion (31A) étant envoyée au compresseur (21) du débit riche en dioxyde de carbone qui sera ensuite condensé et l'autre portion (31B) étant envoyée au compresseur (3) du fluide dont le débit riche en dioxyde de carbone est dérivé.

5. Installation de condensation d'un débit gazeux riche en dioxyde de carbone comprenant un condenseur (27), une conduite pour envoyer le débit gazeux riche en dioxyde de carbone (25) au condenseur, une conduite pour soutirer un débit au moins partiellement condensé (29) riche en dioxyde de carbone du condenseur, une conduite pour envoyer un débit de réfrigérant (31) au condenseur et une conduite pour soutirer un débit de réfrigérant réchauffé du condenseur, des moyens (11) pour séparer un fluide pour former le débit riche en dioxyde de carbone qui sont reliés au condenseur et constitués par une unité (15) de condensation et/ou de distillation ou une unité de lavage aux amines ou une unité de perméation ou une unité d'adsorption et au moins un compresseur (3) du fluide (1) dont le débit gazeux est séparé, dans l'unité, pour former le débit gazeux riche en dioxyde de carbone, le compresseur
du fluide ayant des moyens de refroidissement (5,5A) et étant relié aux moyens pour séparer le fluide, et éventuellement un compresseur (21) du débit gazeux riche en dioxyde de carbone, **caractérisée en ce que** les moyens de refroidissement du compresseur du fluide sont reliés à la conduite pour soutirer le débit de réfrigérant réchauffé, le réfrigérant étant de l'eau, de sorte que les moyens de refroidissement reçoivent au moins une partie du débit d'eau réchauffé.

6. Installation selon la revendication 5 comprenant au moins un autre compresseur (21) dans laquelle les moyens (15) pour séparer le fluide pour former le débit riche en dioxyde de carbone, sont reliés au condenseur (27) par le biais de l'au moins un autre compresseur (21).

7. Installation selon la revendication 5 ou 6 comprenant un circuit d'eau permettant d'envoyer de l'eau réchauffée dans le compresseur du fluide (3) à un moyen de refroidissement (53) et du moyen de refroidissement au condenseur (27).

8. Installation selon les revendications 6 et 7 dans laquelle le circuit d'eau permet d'envoyer de l'eau réchauffée dans les compresseurs (3, 21) au moyen de refroidissement (53) et du moyen de refroidissement au condenseur (27).

9. Installation selon l'une des revendications 5 à 8 comprenant, en plus du compresseur de fluide (3), un compresseur (21) de débit gazeux riche en dioxyde de carbone (25), les deux compresseurs ayant des moyens de refroidissement (5,5A, 23,23A) reliés en série avec le condenseur (27) et en parallèle entre les deux compresseurs.

10. Installation selon l'une des revendications 5 à 8 comprenant, en plus du compresseur de fluide (3), un compresseur (21) de débit gazeux riche en dioxyde de carbone (25), les deux compresseurs ayant des moyens de refroidissement (5,5A, 23,23A) dans laquelle le condenseur (27) est relié en série avec les moyens de refroidissement des deux compresseurs (3, 21) par la conduite pour soutirer le débit d'eau réchauffée.

## Patentansprüche

1. Verfahren zur Kondensation eines kohlendioxidreichen Gasstroms, in dem ein Fluid (1), aus dem der kohlendioxidreiche Strom durch Destillation und/oder durch Waschen mit Aminen und/oder durch Permeation und/oder durch Adsorption stammt, in mindestens einem Verdichter (3) verdichtet wird, ein Strom Kältemittel (31A, 31B) durch Wärmeaustausch mit dem kohlendioxidreichen Strom (25) erwärmt wird, der zumindest teilweise kondensiert, **dadurch gekennzeichnet, dass** der erwärmte Strom, bei dem es sich um Wasser handelt, zu
i) dem mindestens einen Verdichter (3) des Fluids und gegebenenfalls zu
ii) mindestens einem Verdichter (21) des kohlendioxidreichen Stroms geleitet wird, damit das zumindest teilweise Abkühlen von mindestens einer Stufe des Verdichters oder gegebenenfalls der Verdichter gewährleistet ist.

2. Verfahren nach Anspruch 1, wobei der erwärmte Wasserstrom (31A, 31B) während der Abkühlung des Verdichters (3) abgekühlt und zumindest teilweise wieder zurückgeleitet wird, um den zu kondensierenden kohlendioxidreichen Strom abzukühlen.

3. Verfahren nach einem der vorhergehenden Ansprüche, wobei das durch Kondensation von Kohlendioxid erwärmte Wasser (31A, 31B) eine erste Temperatur aufweist und zu dem bzw. den Verdichter(n) (3, 21) mit einer Temperatur geleitet wird, die im Wesentlichen der ersten Temperatur entspricht.

4. Verfahren nach einem der vorhergehenden Ansprüche, wobei das durch Kondensation von Kohlendioxid erwärmte Wasser in zwei Teilmengen (31A, 31B) aufgeteilt wird, wobei eine Teilmenge (31A) zum Verdichter (21) des kohlendioxidreichen Stroms geleitet wird, der anschließend kondensiert wird, und die andere Teilmenge (31B) zum Verdichter (3) des Fluids geleitet wird, aus dem der kohlendioxidreiche Strom stammt.

5. Anlage zur Kondensation eines kohlendioxidreichen Gasstroms, umfassend einen Kondensator (27), eine Leitung zum Leiten des kohlendioxidreichen Gasstroms (25) zum Kondensator, eine Leitung zum Entnehmen eines zumindest teilweise kondensierten kohlendioxidreichen Stroms (29) aus dem Kondensator, eine Leitung zum Leiten eines Kühlmittelstroms (31) zum Kondensator und eine Leitung zum Entnehmen eines erwärmten Kühlmittelstroms aus dem Kondensator, Mittel (11) zum Abtrennen eines Fluids zum Bilden des kohlendioxidreichen Stroms, die mit dem Kondensator verbunden und von einer Einheit (15) zur Kondensation und/oder zur Destillation oder einer Einheit zum Waschen mit Aminen oder einer Einheit zur Permeation oder einer Einheit zur Adsorption gebildet sind, und mindestens einen Verdichter (3) des Fluids (1), von dem der Gasstrom in der Einheit abgetrennt wird, damit der kohlendioxidreiche Gasstrom gebildet wird, wobei der Verdichter des Fluids Mittel zum Kühlen (5, 5A) aufweist und mit Mitteln zum Abtrennen des Fluids verbunden ist, und gegebenenfalls einen Verdichter (21) des kohlendioxidreichen Gasstroms, **dadurch gekennzeichnet, dass** die Mittel zum Kühlen des Verdichters des Fluids mit der Leitung zum Entnehmen des erwärmten Kühlmittelstroms verbunden sind, wobei es sich bei dem Kühlmittel um Wasser handelt, sodass die Mittel zum Kühlen mindestens einen Teil des erwärmten Wasserstroms aufnehmen.

6. Anlage nach Anspruch 5, die mindestens einen weiteren Verdichter (21) umfasst, wobei die Mittel (15) zum Abtrennen des Fluids zum Bilden des kohlendioxidreichen Stroms über den mindestens einen weiteren Verdichter (21) mit dem Kondensator (27) verbunden sind.

7. Anlage nach Anspruch 5 oder 6, die einen Wasserkreislauf umfasst, mit dem in dem Verdichter des Fluids (3) erwärmtes Wasser zu einem Mittel zum Kühlen (53) und von dem Mittel zum Kühlen zum Kondensator (27) geleitet werden kann.

8. Anlage nach Anspruch 6 und 7, wobei mit dem Wasserkreislauf in den Verdichtern (3, 21) erwärmtes Wasser zum Mittel zum Kühlen (53) und von dem Mittel zum Kühlen zum Kondensator (27) geleitet werden kann.

9. Anlage nach einem der Ansprüche 5 bis 8, die zusätzlich zum Verdichter des Fluids (3) einen Verdichter (21) des kohlendioxidreichen Gasstroms (25) umfasst, wobei die beiden Verdichter Mittel zum Kühlen (5, 5A, 23, 23A) aufweisen, die in Reihe mit dem Kondensator (27) und parallel zwischen den beiden Verdichtern geschaltet sind.

10. Anlage nach einem der Ansprüche 5 bis 8, die zusätzlich zum Verdichter des Fluids (3) einen Verdichter (21) des kohlendioxidreichen Gasstroms (25) umfasst, wobei die beiden Verdichter Mittel zum Kühlen (5, 5A, 23, 23A) aufweisen, wobei der Kondensator (27) über die Leitung zum Entnehmen des erwärmten Wasserstroms in Reihe mit den Mitteln zum Kühlen der beiden Verdichter (3, 21) geschaltet ist.

## Claims

1. Method for condensing a gaseous stream rich in carbon dioxide, in which method a fluid (1) from which the stream rich in carbon dioxide is derived by distillation and/or by amine scrubbing and/or by permeation and/or by adsorption, is compressed in at least one compressor (3),
a stream of refrigerant (31A, 31B) is heated up by exchange of heat with the stream (25) rich in carbon dioxide which at least partially condenses, **characterized in that** the heated stream, which is water, is sent to
i) the at least one compressor (3) of the fluid, and potentially also to
ii) at least one compressor (21) of the stream rich in carbon dioxide
in order to at least partially cool at least one stage of said compressor or, as the case may be, of said compressors.

2. Method according to Claim 1, in which the stream of water (31A, 31B), which is heated while the compressor (3) is being cooled, is cooled and returned at least in part in order to cool the stream rich in carbon dioxide that is to be condensed.

3. Method according to either of the preceding claims, in which the water (31A, 31B) heated by condensation of carbon dioxide is at a first temperature and is sent to the compressor(s) (3, 21) at a temperature substantially equal to the first temperature.

4. Method according to one of the preceding claims, in which the water heated by condensation of carbon dioxide is divided into two portions (31A, 31B), one portion (31A) being sent to the compressor (21) of the stream rich in carbon dioxide which will then be condensed, and the other portion (31B) being sent to the compressor (3) of the fluid from which the stream rich in carbon dioxide is derived.

5. Installation for condensing a gaseous stream rich in carbon dioxide, comprising a condenser (27), a pipe for sending the gaseous stream (25) rich in carbon dioxide to the condenser, a pipe for withdrawing an at least partially condensed stream (29) rich in carbon dioxide from the condenser, a pipe for sending a stream (31) of refrigerant to the condenser and a pipe for withdrawing a stream of heated refrigerant from the condenser, means (11) for separating a fluid to form the stream rich in carbon dioxide, which means are connected to the condenser, and consist of a condensation and/or distillation unit (15), or an amine scrubbing unit or a permeation unit or an adsorption unit, and at least one compressor (3) of the fluid (1) from which the gaseous stream is separated, in the unit, to form the gaseous stream rich in carbon dioxide, the fluid compressor having cooling means (5, 5A) and being connected to the means for separating the fluid, and potentially also a compressor (21) of the gaseous stream rich in carbon dioxide, **characterized in that** the means for cooling the fluid compressor are connected to the pipe for withdrawing the stream of heated refrigerant, the refrigerant being water, so that the cooling means receive at least some of the stream of heated water.

6. Installation according to Claim 5, comprising at least one other compressor (21), in which the means (15) for separating the fluid to form the stream rich in carbon dioxide are connected to the condenser (27) via the at least one other compressor (21).

7. Installation according to Claim 5 or 6, comprising a water circuit allowing water heated in the compressor (3) of the fluid to be sent to a cooling means (53) and from the cooling means to the condenser (27).

8. Installation according to Claims 6 and 7, in which the water circuit allows water heated in the compressors (3, 21) to be sent to the cooling means (53) and from the cooling means to the condenser (27).

9. Installation according to one of Claims 5 to 8, comprising, in addition to the fluid compressor (3), a compressor (21) of gaseous stream (25) rich in carbon dioxide, the two compressors having cooling means (5, 5A, 23, 23A) connected in series with the condenser (27) and in parallel between the two compressors.

10. Installation according to one of Claims 5 to 8, comprising, in addition to the fluid compressor (3), a compressor (21) of gaseous stream (25) rich in carbon dioxide, the two compressors having cooling means (5, 5A, 23, 23A) in which the condenser (27) is connected in series with cooling means for the two compressors (3, 21) by the pipe for withdrawing the stream of heated water.
